# FASCICULE DE BREVET EUROPEEN

(11) **EP 3 684 577 B1**
(45) Date de publication et mention de la délivrance du brevet: **22.10.2025**
(21) Numéro de dépôt: 18783549.1
(22) Date de dépôt: 13.09.2018
(51) Int. Cl.: B29B 15/12, C08J 5/10, C08J 5/24, B29K 71/00, B29K 105/00

(54) **PROCEDE D'IMPREGNATION DE FIBRES DE RENFORT AVEC DES POLYARYLETHERCETONES**
VERFAHREN ZUR IMPRÄGNIERUNG VON VERSTÄRKUNGSFASERN MIT POLYARYLETHERKETONEN
METHOD FOR IMPREGNATING REINFORCING FIBRES WITH POLYARYLETHERKETONES

(30) Priorité: 18.09.2017 FR 1758625
(43) Date de publication de la demande: 29.07.2020
(73) Titulaire: Arkema France, 92800 Puteaux (FR)
(72) Inventeur: LE, Guillaume, 14200 Herouville Saint Clair (FR); SGUERRA, Fabien, 06700 Saint Laurent Du Var (FR)
(74) Mandataire: Arkema Patent
(86) Numéro de dépôt international: PCT/FR2018/052244
(87) Numéro de publication internationale: WO 2019/053379

(56) Documents cités:
- EP-A1- 2 392 550
- EP-A2- 0 455 149
- WO-A1-2017/117087
- WO-A2-88/03468
- CN-A- 106 280 938
- DE-A1- 4 121 915
- TEXIER A ET AL: "Fabrication of PEEK/carbon fibre composites by aqueous suspension prepregging", POLYMER, ELSEVIER SCIENCE PUBLISHERS B.V, GB, vol. 34, no. 4, 1 February 1993 (1993-02-01), pages 896 - 906, XP024120464, ISSN: 0032-3861, [retrieved on 19930201], DOI: 10.1016/0032-3861(93)90378-N

## Description

### [Domaine technique]

La présente demande de brevet concerne le domaine de la fabrication de semi-produits comprenant une matrice thermoplastique et des fibres de renfort. Elle concerne également de tels semi-produits ainsi que leur utilisation pour la fabrication de pièces composites.

### [Technique antérieure]

Les matériaux composites associant une résine thermoplastique à des fibres de renfort présentent en raison de leurs excellentes propriétés mécaniques pour un faible poids un grand intérêt dans de nombreux domaines, notamment dans l'industrie aéronautique et spatiale, mais aussi dans l'industrie automobile et des équipements de sport.

Ces matériaux composites sont généralement fabriqués par consolidation de semi-produits constitués de fibres de renfort enrobées de résine tels que des pré-imprégnés sous forme de nappes unidirectionnelles, de mèches ou de tissés.

Ces semi-produits peuvent être obtenus par imprégnation des fibres par la résine. Il existe différents procédés, dans lesquels la résine peut être fondue, dissoute dans un solvant, ou encore sous forme de poudre, soit en lit fluidisée, soit dispersée dans une solution aqueuse. Les fibres imprégnées sont ensuite le cas échéant débarrassées du solvant ou de la solution aqueuse puis chauffées afin de fondre la résine retenue et former le semi-produit.

Pour les polymères à haut point de fusion tels que les polyaryléthercétones (PAEK), l'imprégnation dans un bain de dispersion aqueuse est intéressante au niveau économique et environnemental.

Néanmoins, ce procédé requiert afin d'obtenir une imprégnation au cœur des fibres en résine, d'assurer une répartition homogène de la résine dans la dispersion.

Ainsi, la demande de brevet WO 88/03468 propose de stabiliser la suspension en la rendant très visqueuse (au moins 50 Pa·s) et en ajoutant en outre le cas échéant un tensioactif. Le document propose par ailleurs d'ajouter une quantité mineure de liquide organique miscible à l'eau afin d'accélérer l'élimination du milieu aqueux après imprégnation.

Avec une approche similaire, le brevet US 5,236,972 propose d'ajouter un polymère hydrosoluble, un agent de mouillage, et en outre un biocide, un plastifiant et un agent anti-mousse à la dispersion.

Le brevet US 5,888,580 propose d'utiliser au contraire une dispersion à faible viscosité et contenant peu d'agent dispersant, et de réguler la charge des fibres en résine par le biais de la concentration en résine de la dispersion et le temps de séjour. Cependant, les pièces composites fabriquées à partir de tels semi-produits présentent une porosité élevée et des propriétés mécaniques non optimales.

Afin de remédier à ce problème, la demande FR 3 034 425 propose de disperser la résine thermoplastique au moyen d'un alcool alcoxylé tensioactif spécifique, à savoir l'alcool stéarylique éthoxylé 100 fois, et d'associer un dispositif d'agitation pour maintenir la suspension homogène. Ainsi, les auteurs affirment pouvoir consolider des produits composites sans porosités. Néanmoins, cette invention ne résout pas toutes les difficultés liées à la viscosification de la résine, et peut conduire à des défauts de formage ultérieurs. En effet, à l'état fondu, la résine polymérique trop visqueuse n'est plus capable de s'écouler convenablement. De ce fait, il est difficile d'aboutir à des pièces composites ayant la forme, les propriétés et l'aspect de surface souhaités.

En particulier, il est fréquent d'observer l'apparition de plissages en surface et des problèmes de tenue des soudures réalisées au cours de l'assemblage des pièces composites en pièces complexes. Ces défauts sont exacerbés lorsque la consolidation est réalisée à une pression inférieure à 5 bars.

Le document EP 0 455 149 A2 décrit un procédé de préparation d'un semi-produit flexible per imprégnation des fibres au moyen d'une dispersion de particules de résine. La dispersion peut être aqueuse et peut, aux fins de contrôler la viscosité ou de stabiliser la dispersion, en outre contenir de l'isopropanol ou un autre alcool tel que le méthanol, l'éthanol ou le propanol ou des éthers hydroxylés comme le éthoxyéthanol ou l'éthoxyéthanol.

Le document CN 106 280 938 divulgue une dispersion aqueuse de PEKK notamment pour l'obtention de revêtements comprenant un colloïde épaississant et présentant une viscosité comprise entre 0.1 à 5 Pa.s.De manière générale, il est intéressant de pouvoir fabriquer des pièces composites sans avoir recours à une pression élevée, puisque cela nécessite l'utilisation d'autoclaves très coûteux.

L'invention a pour but de remédier à ces problèmes et de proposer un procédé de préparation de semi-produits susceptibles d'être transformés en pièces composites ne présentant pas les défauts mentionnés ci-dessus.

Elle a également pour but de proposer un procédé de préparation de semi-produits susceptibles d'être consolidés sous faible dépression, hors autoclave.

Plus spécifiquement, l'invention a pour but de proposer un tel procédé de préparation de semi-produits dans lesquels la résine présente une viscosité et une cristallinité évoluant peu suite aux cycles thermiques requis pour la fabrication de pièces composites.

### [Résumé de l'invention]

Les buts mentionnés ci-dessus ont été atteints par un procédé selon l'invention, dans lequel les fibres de renfort sont imprégnées dans une dispersion aqueuse de résine PAEK pulvérulente comportant une quantité minimale de tensioactif.

En effet, il a été constaté qu'il était possible de limiter la quantité de tensioactifs et/ou d'agents épaississants en ajoutant des composés organiques volatils miscibles à l'eau. En effet, ces composés permettent d'augmenter la viscosité de la dispersion et de la stabiliser. En revanche, ces composés ne subsistent pas dans la résine du fait de leur volatilité.

Il a été constaté par ailleurs que ces composés organiques volatils miscibles à l'eau peuvent avoir un effet anti-mousse, ce qui permet de diminuer encore la présence d'additifs tels que des agents anti-mousse. En effet, ces additifs peuvent également être néfastes lors de la consolidation et peuvent par ailleurs gêner l'adhésion entre la fibre et la matrice.

En effet, la présente invention repose sur la constatation que la qualité des pièces composites à base de résines PAEK dépend notamment de la viscosité de la résine dans le semi-produit et de son évolution ultérieure. Or, aux températures élevées nécessaires pour la fabrication et la consolidation de semi-produits à base de PAEK (températures généralement supérieures à 300°C), les composés introduits pendant le procédé peuvent se décomposer en espèces réactives, qui peuvent engendrer des réactions d'allongement de chaîne des PAEK dont des branchements. L'augmentation de la masse moléculaire qui en découle augmente alors la viscosité de la résine.

Or l'étude systématique des différents agents susceptibles d'être présents dans le semi-produit à base PAEK a révélé d'une part que les additifs utilisés dans la dispersion constituait un facteur principal de l'augmentation de la viscosité après un cycle thermique et d'autre part que cet effet était très variable selon leur dosage.

Sur cette base, il a pu être validé que l'utilisation d'un tensioactif à faible dosage permet de limiter l'évolution de la viscosité de la résine et d'obtenir des pièces composites de qualité requise.

Sans vouloir être lié par cette hypothèse, il est supposé que de nombreux composés, notamment organiques, se décomposent dans la résine PAEK sous l'effet de la température élevée requise pour la fondre. Les espèces réactives formées lors de la décomposition, notamment les radicaux, peuvent alors réagir avec le polymère et provoquer des réactions d'allongement de chaîne dont des branchements, lesquelles augmentent la masse moléculaire du polymère et de ce fait également sa viscosité. Or, lorsque la résine présente une viscosité élevée, elle n'est plus à même de bien imprégner et d'enrober les fibres, d'assurer une bonne adhésion des semi-produits entre eux, ni d'épouser les parois de moule, ce qui affecte la qualité des produits composites obtenus. La présence d'additifs dans la dispersion peut par ailleurs également affecter la température de cristallisation et le niveau de cristallinité de la résine, et de ce fait poser des difficultés lors de la mise en forme ultérieure et pour les propriétés du composite. Aussi, selon un premier aspect, l'invention a pour objet un procédé selon la revendication 1.

De préférence, le composé organique volatil est choisi parmi les alcools, cétones, aldéhydes, esters d'acides carboxyliques, glycols et éthers, en particulier **un** alcool choisi parmi le méthanol, l'éthanol, l'isopropanol, le n-propanol, le n-butanol, le 2-butanol, le tert. butanol, le 1-méthoxy-2-propanol, le 1-éthoxy-2-propanol et leurs mélanges, **un** glycol choisi parmi l'éthylène glycol, le propylène glycol et leurs mélanges, une cétone telle que l'acétone, **un** éther, **un** ester d'acide carboxylique choisi parmi l'acétate de méthyle, l'acétate d'éthyle et l'acétate de propyle et leurs mélanges.

Avantageusement, le composé organique volatil forme avec l'eau de la phase aqueuse **un** azéotrope. De préférence, les fibres de renfort sont des fibres de carbone.

La phase aqueuse de la dispersion présente de préférence une viscosité dynamique, mesurée à 25°C sous contrainte de cisaillement de 6,8 s⁻¹ sur un viscosimètre Brookfield DV2T Extra, est de 0.1 à 5, en particulier de 0.300 à 3 et tout particulièrement de 0.5 à 2 Pa·s.

Le procédé de l'invention est particulièrement utile lorsque la résine PAEK est choisie parmi le groupe constitué de poly-éther-cétone (PEK), polyéther-éther-cétone (PEEK), poly-éther-éther-cétone-cétone (PEEKK), poly-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK. En particulier, la résine PAEK peut être un PEKK présentant un pourcentage massique en motifs téréphtaliques par rapport à la somme des motifs téréphtaliques et isophtaliques compris entre 35 et 100%. Avantageusement, la résine PAEK pulvérulente dans la dispersion présente un diamètre médian D50 de 1 à 300 µm, de préférence de 5 à 100 et tout particulièrement de 10 à 50 µm tel que mesuré selon la norme ISO 13 320.

Avantageusement, le semi-produit préparé est choisi parmi un pré-imprégné ou une tape.

Par ailleurs, selon un deuxième aspect, l'invention a pour objet une dispersion selon la revendication 11.

De préférence, la dispersion de l'invention comprend 15 - 35% en poids de résine à base de PAEK. Selon un troisième aspect non revendiqué, la présente divulgation a pour objet un semi-produit comprenant une résine à base d'un PAEK et des fibres de renfort, susceptible d'être obtenu par le procédé de l'invention. Avantageusement, le semi-produit est caractérisé par le fait que la masse moléculaire moyenne en poids M_{W} de la résine PAEK, telle que mesurée par analyse chromatographique d'exclusion stérique, n'augmente pas de plus de 100% après traitement thermique à 375°C pendant 20 minutes.

Selon un quatrième aspect non revendiqué, la présente divulgation a pour objet l'utilisation d'un semi-produit tel que décrit ci-dessus pour la fabrication de composites.

### [Brève description des figures]

L'invention sera mieux comprise au regard de la description qui suit et la figure, laquelle montre :
- Fig. unique: l'aspect des dispersions selon les exemples 12 à 14 après agitation vigoureuse et repos de 5 minutes (gauche : dispersion selon l'exemple comparatif 12, milieu : dispersion selon l'exemple 13, droite : dispersion selon l'exemple 14).

### [Description des modes de réalisation]

### Définition des termes

On entend par le terme « **semi-produit** » désigner des produits comprenant une résine et des fibres de renfort utilisés comme produits intermédiaires dans la fabrication de matériaux composites. Ces produits peuvent être notamment des pré-imprégnés sous formes de nappes unidirectionnelles de mèches, de tissés, ou encore des mélanges fibres-matrices.

Les semi-produits peuvent ensuite être assemblés, par exemple par drapage manuel ou automatisé ou par dépose robotisée (« automated fiber placement »), et mis en forme par consolidation, pour la fabrication de pièces composites. Les pièces composites ainsi fabriqués peuvent être transformées davantage, afin d'obtenir des assemblages de pièces composites complexes. Ainsi, il est possible de co-consolider des pièces composites, procédé généralement réalisé en autoclave au moyen d'un nouveau cycle thermique, ou de venir souder des pièces les unes aux autres par échauffement local.

On entend désigner par le terme de « **résine** » une composition comprenant majoritairement un ou plusieurs polymères additionnés le cas échéant des additifs conventionnels, notamment des charges et additifs fonctionnels.

On entend par le terme de « **dispersion** » désigner une composition hétérogène comportant une phase liquide et une phase solide. Dans la dispersion mise en œuvre dans le procédé de l'invention, la phase liquide est aqueuse et contient un tensioactif thermiquement stable ainsi que d'autres additifs, le cas échéant. La phase solide comprend ou consiste essentiellement en la résine PAEK sous forme pulvérulente.

On entend par le terme de « **tensioactif** » désigner un composé présentant une partie hydrophile et une partie lipophile, et capable de disperser la poudre de résine dans la phase liquide et de la maintenir en suspension en présence ou en absence d'agitation. Ce composé peut aussi aider au mouillage des fibres par la dispersion.

On entend par le terme de « **composé organique** » désigner un composé contenant au moins l'élément carbone et un ou plusieurs des éléments suivants : hydrogène, halogènes, oxygène, soufre, phosphore, silicium ou azote, à l'exception des oxydes de carbone et des carbonates et bicarbonates.

On entend par le terme de « **composé volatil** » dans le cadre de cet exposé un composé dont la température d'ébullition à pression atmosphérique est inférieure à 200°C, et de préférence inférieure à 150°C, encore préféré inférieure à 120°C et tout particulièrement inférieure à 100°C.

### La dispersion

La dispersion mise en œuvre dans le procédé proposé comporte selon l'invention une phase aqueuse dans laquelle est dispersée une résine PAEK sous forme de poudre.

La résine de PAEK comporte pour l'essentiel au moins un polymère polyaryléthercétone (PAEK). Les poly-(aryl-éther-cétones) (PAEK) comportent les motifs de formules suivantes:

(- Ar - X -) et (- Ar₁ - Y - )

dans lesquelles :
- Ar et Ar₁ désignent chacun un radical aromatique divalent;
- Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène, éventuellement substitués;
- X désigne un groupe électroattracteur ; il peut être choisi, de préférence, parmi le groupe carbonyle et le groupe sulfonyle,
- Y désigne un groupe choisi parmi un atome d'oxygène, un atome de soufre, un groupe alkylène, tel que -CH₂- et l'isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène. Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-cétone-cétone, également nommé PEKK, comprenant des motifs de formule I A, de formule I B et leur mélange : 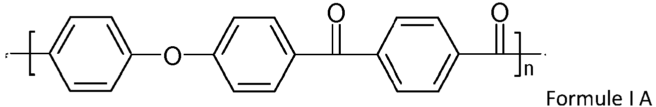 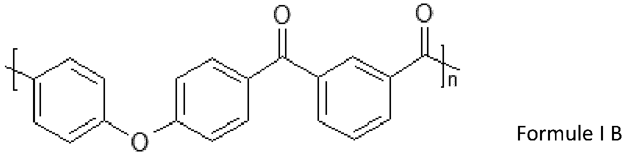
- un poly-éther-éther-cétone, également nommé PEEK, comprenant des motifs de formule II:

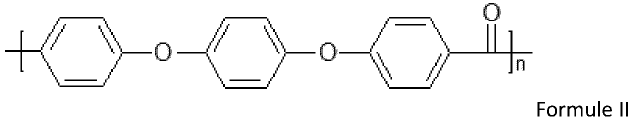

Les enchainements peuvent être totalement para (Formule II). De la même façon on peut introduire, partiellement ou totalement, des enchaînements méta dans ces structures au niveau des éthers et des cétones selon les deux exemples des formules III et IV ci-dessous :

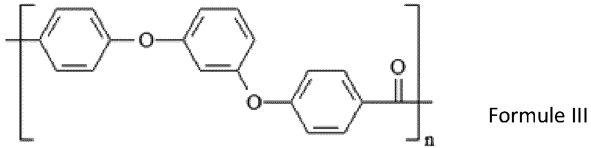

Ou encore :

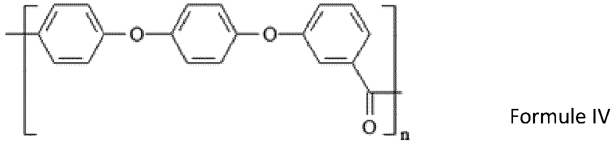

Ou des enchainements en ortho selon la formule V : 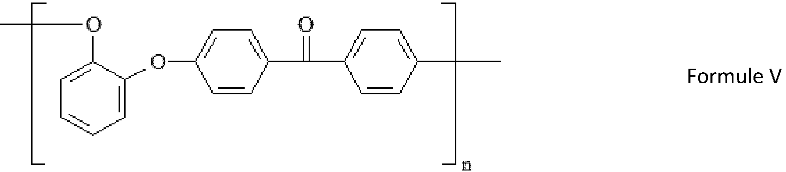
- un poly-éther-cétone, également nommé PEK, comprenant des motifs de formule VI :

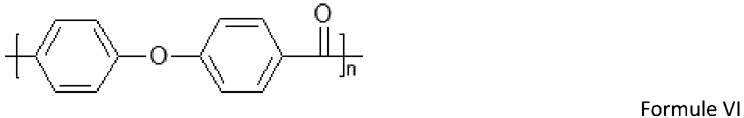

De la même façon, l'enchainement peut être totalement para mais on peut introduire aussi des enchaînements méta partiellement ou totalement (formules VII et VIII): 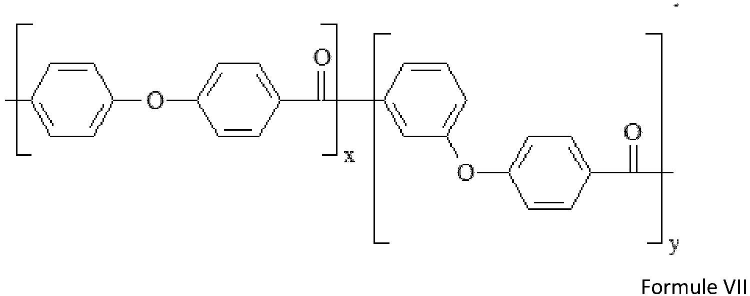 ou 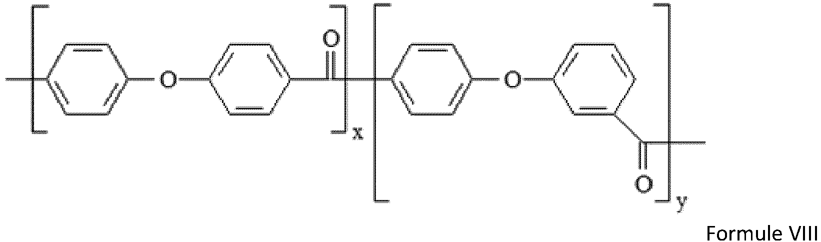
- un poly-éther-éther-cétone-cétone, également nommé PEEKK, comprenant des motifs de formules IX :

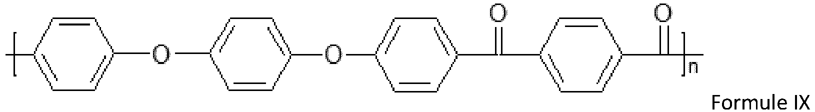

De la même façon on peut introduire des enchaînements méta dans ces structures au niveau des éthers et des cétones.
- un poly-éther-éther-éther-cétone, également nommé PEEEK, comprenant des motifs de formules X :

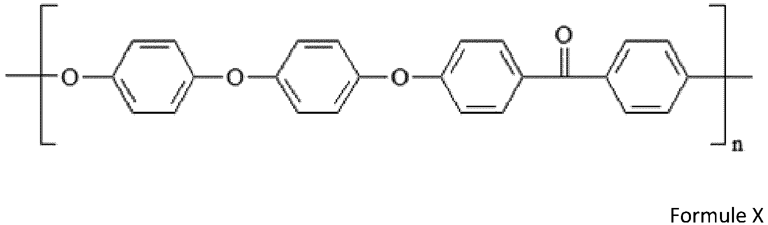

De la même façon on peut introduire des enchaînements méta dans ces structures au niveau des éthers et des cétones mais aussi des enchaînements biphénols ou diphényls selon la formule XI (motifs de type D dans les prochaines appellations, la formule XI correspond ainsi à l'appellation PEDEK) :

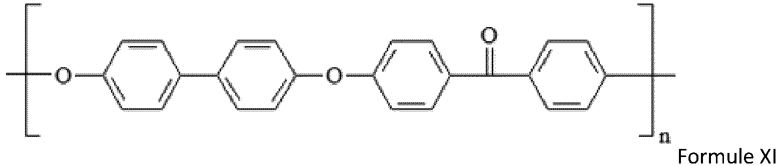

D'autres arrangements du groupe carbonyle et de l'atome d'oxygène sont également possibles.

De préférence, les PAEK utilisés dans l'invention sont choisis parmi le groupe constitué de poly-éther-cétone (PEK), polyéther-éther-cétone (PEEK), poly-éther-éther-cétone-cétone (PEEKK), poly -éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK. Le PEEK et le PEKK ainsi que leurs mélanges sont particulièrement préférés.

Avantageusement, la stabilité du PAEK à l'état fondu peut être améliorée par ajout d'un ou plusieurs phosphates ou sels de phosphate.

De préférence, la résine PAEK comprend au moins un polyéther-cétone-cétone (PEKK) qui représente plus de 50%, de préférence plus de 60%, notamment plus de 70%, encore préféré plus de 80% et en particulier plus de 90% massique de la résine, borne comprise. Les 10 à 50% massiques restants peuvent être constitués par d'autres polymères appartenant ou non à la famille des PAEK.

De manière davantage préférée, la résine PAEK est essentiellement constituée de PEKK.

Avantageusement, le PEKK présente un pourcentage massique en motifs téréphtaliques par rapport à la somme des motifs téréphtaliques et isophtaliques de 35 à 100%, en particulier de 40 à 95%, encore préféré de 50 à 90%, de préférence de 60 à 80%, et tout particulièrement, ce rapport est de 65 à 75%.

La résine peut par ailleurs, comme discuté ci-dessus, comporter en outre d'autres additifs habituels tels que des charges. Par ailleurs, la résine peut comporter éventuellement des quantités mineures d'additifs fonctionnels. De préférence, la résine est néanmoins dépourvue d'additifs susceptibles de se décomposer sous l'effet de la chaleur afin de limiter le risque d'évolution de la viscosité.

La granulométrie de la poudre de résine de PAEK peut avoir un impact sur la stabilité de la suspension. Elle peut également influencer la qualité d'imprégnation en résine des fibres de renfort. Afin d'assurer l'homogénéité optimale de la suspension et une bonne imprégnation, il est préféré que la poudre de résine soit finement divisée. Plus spécifiquement, il est préféré que la poudre de PAEK présente un diamètre médian D50 est situé dans une plage de 1 à 300 µm, de préférence de 5 à 100 et tout particulièrement de 10 à 50 µm tel que mesuré selon la norme ISO 13 320.

De préférence, la teneur en poudre de résine PAEK de la dispersion est avantageusement comprise entre 1 et 50 %, de préférence entre 10 et 40% et tout particulièrement 25 à 35% en poids par rapport au poids de la dispersion finie.

Comme évoqué précédemment, le procédé selon l'invention est caractérisé par le fait que la dispersion comporte par ailleurs au moins un tensioactif.

A titre de tensioactif, on peut choisir un tensioactif ionique ou non ionique. De préférence, il s'agit d'un tensioactif ionique, et en particulier d'un tensioactif anionique.

Selon un mode de réalisation particulièrement préféré, le tensioactif comporte un groupe phosphate. En effet, les phosphates semblent moins enclins à réagir avec les résines PAEK que d'autres tensioactifs lorsqu'ils sont utilisés dans le procédé d'imprégnation par dispersion aqueuse.

Plus spécifiquement, on peut citer notamment les tensioactifs de la famille des alcools éthoxylés tels que les alcools éthoxylés et leurs mono- ou di-esters avec l'acide phosphorique. Les alcools éthoxylés sont notamment des alcools comportant 6 à 24 et en particulier 10 à 16 atomes de carbone. De préférence, il s'agit de monoesters d'acide phosphorique et d'alcools éthoxylés. Particulièrement préférés sont les alkyléther phosphates et alkylaryléther phosphates.

On privilégiera parmi ces tensioactifs ceux possédant un minimum de motifs oxyde d'alkyles courts, notamment d'alkyls en C₁ à C₃. En effet, les motifs oxyde de méthylène, oxyde d'éthylène et oxyde de propylène sont particulièrement sensibles thermiquement et aptes à générer des radicaux.

Il a été en effet mis en évidence qu'une diminution de la teneur en motifs d'oxyde d'alkyles courts améliore la qualité du PEKK en consolidation à l'état fondu. Une telle diminution peut être obtenue en maîtrisant la quantité de tensioactif d'une part et en choisissant un tensioactif à faible teneur en motifs d'oxydes d'alkyles courts d'autre part.

Or ces motifs d'oxyde d'alkyle sont aussi particulièrement efficaces pour assurer une bonne mise en dispersion de la poudre de PAEK. Ainsi, on estime qu'une teneur de 0.15, de préférence de 0.20 et en particulier 0.30% en poids de motifs oxyde d'alkyle courts par rapport au poids de PAEK est particulièrement avantageux.

En termes de stabilité, on privilégiera des tensioactifs ayant un nombre de motifs d'oxyde d'alkyle faible, notamment inférieur à 50, en particulier de 5 à 40, et encore préféré entre 10 et 30.

Particulièrement préférés sont les tensioactifs de formule ci-dessous :

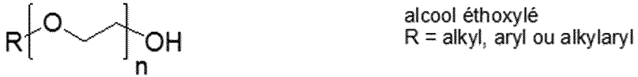

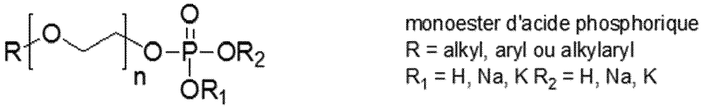

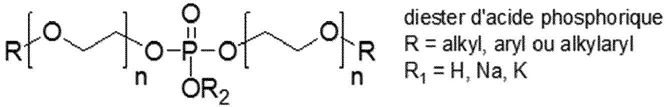

Comme évoqué ci-dessus, le nombre de motifs d'oxyde d'alkyle (nombre n) dans ces formules est de préférence inférieur à 50, en particulier de 5 à 40, et encore préféré entre 10 et 30.

A titre de composés de cette famille, on peut citer notamment les tensioactifs vendus sous la dénomination de Lanphos PE35 par la société Lankem, Cecabase RT par la société CECA France et Klearfac AA270 par la société DeWolf.

Ce tensioactif peut être utilisé sous forme d'acide libre, mais il est de préférence neutralisé. La neutralisation peut être réalisée au préalable ou in situ dans la dispersion par ajout d'une quantité appropriée d'hydroxyde de sodium ou de potassium.

Selon l'invention, la dispersion comporte pas plus que 1%, de préférence pas plus de 0.5 %, en particulier pas plus de 0.4 %, et tout particulièrement pas plus de 0.3 % en poids de tensioactif, calculé par rapport au poids de résine à disperser.

Il peut être intéressant d'ajouter plusieurs tensioactifs. En particulier, on peut choisir un tensioactif permettant d'assurer une bonne dispersion de la poudre de résine PAEK et un autre tensioactif afin d'améliorer l'affinité des fibres de renfort avec la poudre de résine PAEK.

Selon un mode de réalisation particulier de l'invention, la dispersion ne comporte pas de tensioactif.

La phase aqueuse de la dispersion peut, si nécessaire, comporter des quantités mineures d'autres additifs conventionnels tels que des agents épaississants, agents anti-mousse, agents biocides. Afin de limiter la présence d'additifs dans les semi-produits et les problèmes potentiels associés, la dispersion comporte néanmoins une teneur de préférence minimale d'autres additifs. De préférence toutefois, la phase aqueuse de la dispersion ne comporte pas d'autres additifs conventionnels, en particulier pas d'agents épaississants. De préférence, la quantité en autres additifs n'excèdera pas 4% en poids, en particulier 3% et tout particulièrement 2% en poids de la dispersion finie.

La phase aqueuse de la dispersion est constituée majoritairement d'eau. La phase aqueuse de la dispersion comporte au moins 60% en poids, de préférence 70%, encore préféré 80% et tout particulièrement 90% en poids d'eau. L'eau utilisée pour préparer la dispersion est de préférence une eau déminéralisée.

Selon l'invention, la dispersion comporte en outre un ou plusieurs composés organiques volatils. Ces composés peuvent être choisis notamment dans les familles des alcools, cétones, aldéhydes, esters d'acides carboxyliques, glycols et éthers.

De préférence le composé organique volatil est un alcool choisi parmi le l'éthanol, l'isopropanol, le n-propanol, le n-butanol, le 2-butanol, le tert. butanol, le 1-méthoxy-2-propanol, le 1-éthoxy-2-propanol et leurs mélanges, un glycol choisi parmi l'éthylène glycol, le propylène glycol et leurs mélanges, une cétone choisie telle que l'acétone, un éther, un ester d'acide carboxylique choisi parmi l'acétate de méthyle, l'acétate d'éthyle et l'acétate de propyle et leurs mélanges.

Particulièrement préférés sont les composés organiques volatils formant un azéotrope avec l'eau facilitant leur élimination tels que l'éthanol, l'acétate de méthyle, l'acétate de propyle et leurs mélanges.

Comme déjà évoqué, il a été observé que l'ajout de tels composés organiques volatils à la phase aqueuse permet de diminuer voire supprimer la teneur de tensioactif requise pour stabiliser la résine PAEK dans la dispersion, ce qui permet de limiter les dégradations thermiques néfastes dans le PAEK lors de l'étape de consolidation. Par ailleurs, ces composés peuvent permettre d'augmenter la viscosité de la dispersion en assurant **un** meilleur mouillage des particules dispersées. Néanmoins, leur volatilité assure qu'ils ne subsistent pas dans la résine, contrairement à des additifs habituels non volatils qui risquent alors d'être décomposés en espèces réactives à la fusion de la résine.

La phase aqueuse de la dispersion comporte de préférence 1 à 50, en particulier 5 à 40, encore préféré 10 à 30 et tout particulièrement 15 à 25% en poids d'un ou plusieurs composés volatils.

La dispersion obtenue présente de préférence une viscosité dynamique, telle que mesurée à 25°C sous contrainte de cisaillement de 6,8 s⁻¹ sur un viscosimètre Brookfield DVT2T Extra, de 0.1 Pa·s à 20 Pa·s, en particulier de 0.1 à 5, en particulier de 0.3 à 3 et tout particulièrement de 0.5 à 2 Pa·s.

Le procédé de préparation de la dispersion peut être réalisé de manière connue en soi. Plus spécifiquement, on peut par exemple préparer la dispersion en introduisant dans **un** récipient de volume adapté et muni d'un dispositif d'agitation approprié la quantité d'eau requise puis en ajoutant ensuite le tensioactif ainsi que le ou les autres additifs, le cas échéant. Si nécessaire, le mélange est agité jusqu'à l'obtention d'une solution homogène. Dans la solution aqueuse est ensuite introduit la résine de PAEK pulvérulente puis on agite jusqu'à obtention d'une dispersion stable.

### Les fibres de renfort

Les fibres de renfort peuvent être en principe des fibres quelconques habituellement utilisées dans la fabrication de semi-produits.

Conformément à l'invention, les fibres de renfort peuvent être choisies parmi toutes les fibres susceptibles d'être utilisées comme renfort dans la fabrication de pièces en matériaux composites.

Ainsi, il peut notamment s'agir de fibres de verre, de fibres de quartz, de fibres de carbone, de fibres de graphite, de fibres de silice, de fibres métalliques comme des fibres d'acier, des fibres d'aluminium ou des fibres de bore, de fibres céramiques comme des fibres de carbure de silicium ou de carbure de bore, de fibres organiques de synthèse comme des fibres d'aramide ou des fibres de poly(p-phénylène benzobisoxazole), plus connues sous le sigle PBO, ou encore de fibres de PAEK, ou encore de mélanges de telles fibres.

De préférence, il s'agit de fibres de carbone ou de fibres de verre, et plus particulièrement de fibres de carbone.

Selon un mode de réalisation préféré, les fibres n'induisent pas en combinaison avec les autres composés d'évolution notable de la viscosité du PAEK dans le semi-produit et dans le composite.

Les fibres sont de préférence non ensimées. Lorsqu'elles sont ensimées, l'ensimage est de préférence adapté à la matrice, notamment en ce qu'il n'entraîne pas de produits de dégradation néfastes pour la matrice.

Les fibres de renfort utilisées pour la fabrication de semi-produits par imprégnation par voie de dispersion aqueuse sont généralement continues.

De préférence, elles se présentent sous la forme de fibres unidirectionnelles, par exemple sous forme de fils regroupant plusieurs milliers de filaments élémentaires (typiquement de 3000 à 48000) mesurant, par exemple, 6 à 10 µm de diamètre pour les fibres de carbone. Ce type de fibres est connu sous la dénomination de mèche (en anglais «rovings»).

Les fibres peuvent néanmoins aussi être organisées de manière différente, par exemple sous forme de mat, ou encore de textiles obtenus par tissage de mèches.

### Le procédé de fabrication des semi-produits

Le procédé de fabrication selon l'invention peut être réalisé de manière conventionnelle, sur l'équipement habituel, en mettant en œuvre la dispersion telle que décrite ci-dessus. Comme indiqué précédemment, la présence dans la dispersion d'un tensioactif à faible dosage permet de limiter la formation d'espèces réactives susceptibles d'augmenter la masse moléculaire de la résine et de ce fait sa viscosité, et par ce biais de réduire l'apparition de défauts dans les pièces composites.

Plus spécifiquement, les semi-produits sont obtenus par introduction et circulation des fibres de renfort dans un bain de dispersion aqueuse telle décrite ci-dessus. Les fibres imprégnées de résine PAEK sont ensuite sorties du bain et débarrassées de l'eau, par exemple par séchage dans un four à infra-rouges. Les fibres imprégnées séchées sont ensuite chauffées jusqu'à fusion de la résine, afin de permettre l'enrobage des fibres par la résine PAEK. Les fibres enrobées obtenues sont ensuite le cas échéant mises en forme, par exemple par calandrage. Cette étape peut permettre de texturer et d'assurer le dimensionnement du semi-produit.

De préférence, les semi-produits selon l'invention comportent de 1 à 99% en poids, de préférence 30 à 90%, en particulier 50 à 80% en poids, et en particulier 60 à 70% en poids de fibres de renfort.

Avantageusement, ces semi-produits sont caractérisés par le fait que la masse moléculaire moyenne en poids M_{W} de la résine PAEK, telle que mesurée par analyse chromatographique d'exclusion stérique, n'augmente pas de plus de 100% après traitement thermique à 375°C pendant 20 minutes sous air.

Les semi-produits obtenus selon le procédé de l'invention peuvent être utilisés notamment pour la fabrication de pièces composites.

Les pièces composites sont obtenues par exemple en fabriquant d'abord une préforme, notamment par placement ou drapage des semi-produits préimprégnés dans un moule. La pièce composite est ensuite obtenue par consolidation, étape lors de laquelle la préforme est chauffée, généralement sous pression dans un autoclave, de sorte à assembler par fusion les semi-produits. De préférence, les semi-produits fabriqués selon l'invention peuvent être consolidés hors autoclave, par exemple sous bâche à vide placée dans une étuve.

Les semi-produits fabriqués selon le procédé de l'invention sont caractérisés en particulier par une résine dont la viscosité a peu évolué malgré les températures élevées requises pour leur fabrication afin de fondre la résine.

Dans les procédés de fabrication des pièces composites, les semi-produits sont soumis à différents cycles thermiques sous pression ou sous vide afin de les assembler entre eux pour former la pièce composite et/ou de la mettre en forme.

Les produits composites fabriqués selon le procédé de l'invention sont caractérisés en particulier par une résine dont la viscosité a peu évoluée malgré les températures élevées requises pour leur fabrication. Lors de ces étapes, une viscosité pas trop élevée de la matrice est essentielle afin d'assurer que les semi-produits épousent bien les formes du moule. La viscosité de la matrice permet également d'assurer un bon écoulement pendant la consolidation et éviter ainsi les défauts de surface tels que des plissements.

L'invention sera expliquée plus en détail dans les exemples qui suivent.

### [EXEMPLES]

### Exemple 1 à 9 : Evolution de la température de cristallisation selon le dosage de tensioactif

L'impact du cycle thermique sur une résine PEKK (KEPSTAN 7002 commercialisé par la société Arkema France) a été étudié pour des dosages variables de différents tensioactifs en mesurant la température de cristallisation. La température de cristallisation est, comme la viscosité, affectée par les réactions d'allongement dont celles de branchements. En effet, lorsque la masse moléculaire moyenne du polymère augmente, la viscosité augmente et la température de cristallisation diminue.

Les tensioactifs suivants ont été étudiés :
- Brij S 100, vendu par la société Sigma Aldrich : Monooctadécyl éther de polyéthylène glycol (100)
- Lanphos PE35, vendu par la société Lankem : monoester d'acide phosphorique et d'alcool en C13
- Lanphos PE35 neutralisé : Lanphos PE35 neutralisé par addition de solution d'hydroxyde de sodium selon le protocole suivant :

### Préparation d'une solution aqueuse de PE35 Na à 1 % massique

On introduit du Lamphos PE35 (1g) et une solution de NaOH à 1 mol/L (1.3g) dans un bécher, on complète avec de l'eau distillée (97.7g) et on agite le mélange vigoureusement pendant 10 minutes jusqu'à obtention d'une solution limpide. La quantité de solution de NaOH 1M correspond à 0.95 équivalent de soude (déterminé par dosage acido-basique d'une solution aqueuse de PE 35).

On a préparé des échantillons de PEKK imprégnés de ces tensioactifs de la façon suivante :
On prépare une solution aqueuse de X% en poids de tensioactif par introduction dans une fiole de (1000-X) g d'eau ainsi que de Xg du tensioactif. La solution aqueuse est homogénéisée pendant 10 minutes à l'aide d'un broyeur homogénéisateur.

Ensuite, on introduit 3g de poudre de PEKK (commercialisée sous le nom de Kepstan 7002PT par la société Arkema France, D50 = 20µm) à (3·X)g de solution à 1 % en poids de tensioactif préparée dans un ballon monocol de 250mL de sorte à ce que le ratio massique tensioactif / PEKK soit de X%). On ajoute ensuite 10mL d'eau distillée et agite vigoureusement pendant 10 minutes à l'aide d'un agitateur magnétique.

Enfin, on évapore l'eau de la dispersion obtenue à l'aide d'un évaporateur rotatif et on sèche la poudre sous vide à 120°C pendant 2h afin de récupérer une poudre de PEKK imprégnée de tensioactif.

A titre d'exemple, pour l'exemple 3 :
- 3g de PEKK
- 3 × 0.8 = 2.4g de solution aqueuse de Brij S100 à 1% en poids
- 10g d'eau distillée

On mesure la température de cristallisation du PEKK par calorimétrie à balayage (DSC) après un cycle thermique lors duquel l'échantillon de poudre imprégnée de tensioactif est chauffé à 380°C pendant 30 minutes sous azote.

Les résultats dans le tableau 1 ci-dessous fait apparaître une diminution notable de la température de cristallisation après cycle thermique pour l'ensemble échantillons. On peut raisonnablement supposer que la viscosité de la résine augmente en même proportion, engendrant des difficultés de mise en œuvre du semi-produit obtenu.

Par ailleurs, pour un tensioactif donné, la température de cristallisation après cycle thermique diminue nettement plus lorsque le dosage augmente, pour les teneurs examinés entre 0,25 et 1,25% en poids.

**Tableau 1 : Température de cristallisation de PEKK imprégné de tensioactif**

| **Ex** | **Tensioactif** | **Dosage*** (% en poids par rapport au poids de PEKK) | **Motifs OE** (% poids de par rapport au poids de PEKK) | **T_{crist} après cycle thermique** (°C) |
|---|---|---|---|---|
| REF | - | 0 | 0 | 269 |
| 1 | Brij S100 | 0.27 | 0.25 | 264 |
| 2 | Brij S100 | 0.53 | 0.5 | 248 |
| 3 | Brij S100 | 0.8 | 0.75 | 250 |
| 4 | Lanphos PE35 | 0.58 | 0.26 | 258 |
| 5 | Lanphos PE35 | 1.16 | 0.51 | 256 |
| 6 | Lanphos PE35 | 1.74 | 0.77 | 239 |
| 7 | Lanphos PE35 neutralisé au NaOH | 0.57 | 0.25 | 268 |
| 8 | Lanphos PE35 neutralisé au NaOH | 1.14 | 0.49 | 265 |
| 9 | Lanphos PE35 neutralisé au NaOH | 1.70 | 0.73 | 258 |

| | | | | |
|---|---|---|---|---|
| * masse de tensioactif/masse de PEKK | | | | |

Enfin, on note qu'à dosage égal, l'effet sur la température de cristallisation dépend du tensioactif choisi : le tensioactif Lanphos PE35 engendre qu'une diminution très modérée alors que la diminution est très marquée pour le tensioactif Brij S100 qui présente une proportion en masse d'oxyde d'éthylène élevée Au vu de ces résultats, il apparaît donc intéressant de choisir un tensioactif adapté et d'utiliser un faible dosage de tensioactif.

### Exemple 10 : Effet d'un composé organique volatil sur la stabilité de la dispersion

Lorsqu'on réduit la quantité de tensioactif au-delà d'un certain seuil, la dispersion ne peut plus être stabilisée convenablement, ce qui peut poser des difficultés lors de la fabrication de semi-produits tels que des pré-imprégnés.

Or il a été remarqué que l'addition de certains composés organiques volatils tels que des alcools permet de réduire le dosage de tensioactif voir l'éliminer requis pour stabiliser une dispersion de poudre de PAEK en milieu aqueux.

Afin d'étudier plus en détail cet effet, on a préparé des dispersions aqueuses contenant 33% en poids de poudre de PEKK et des teneurs variables de tensioactif et d'isopropanol. Le protocole de préparation est expliqué ci-après pour une dispersion contenant 30% en poids d'isopropanol par rapport à la phase aqueuse et 1% en poids de tensioactif, par rapport au poids de PEKK.

Dans un récipient adapté muni d'un moyen d'agitation, on introduit 6g de PEKK (Kepstan 7002PT vendu par la société Arkema France, D50 = 20µm) et on ajoute Xg de tensioactif (X étant tel que le ratio massique tensioactif/ PEKK = X%). Ensuite, on ajoute 12g de mélange eau/isopropanol (100-n/n (n étant le pourcentage d'isopropanol, n = 0 - 30) à la solution et on agite la dispersion obtenue vigoureusement pendant 30 minutes à l'aide d'un agitateur magnétique. Les mélanges ainsi réalisés sont ensuite séchés pendant 12 heures sous vide à 120°C.

On juge ensuite chaque dispersion préparée sur le plan de sa stabilité après 60 minutes de sa préparation. La dispersion est considérée comme :
- stable (+) lorsque le PEKK est parfaitement dispersé dans la solution,
- assez stable (o) lorsque le PEKK est bien dispersé mais qu'il se dépose un peu sur les parois, et
- inhomogène (-) lorsque le PEKK n'est pas complètement dispersé.

La composition et la stabilité des différentes dispersions réalisées sont rassemblées dans le tableau 2 ci-dessous.

**Tableau 2 : Stabilité de dispersions de poudre de PEKK**

| X : Teneur en tensioactif (en % en poids par rapport au poids de PEKK) | n : Teneur en isopropanol (en % en poids de la phase liquide) | | | | |
|---|---|---|---|---|---|
| | 30 | 25 | 20 | 10 | 0 |
| 1 | + | + | + | + | + |
| 0.5 | + | + | + | + | + |
| 0.25 | + | + | + | + | o |
| 0.1 | + | + | o | o | - |
| 0 | o | o | o | o | - |

La série d'essais a été répétée en utilisant le *tert*-butanol comme alcool, avec des résultats équivalents.

Ces résultats mettent en évidence qu'une partie, voire la totalité du tensioactif peut être remplacée par un alcool tel que l'isopropanol ou le *tert*-butanol en tant que dispersant de la poudre de PEKK.

### Exemple 11 : Effet d'un agent épaississant sur la température de cristallisation

L'impact de la présence d'agents épaississants sur l'évolution de la température de cristallisation après cycle thermique a été étudié comme suit.

On a préparé une poudre de PEKK imprégnée dans une solution à 0.1% en poids de tensioactif comme indiqué dans l'exemple 1, mais en ajoutant à la solution de tensioactif en outre 6% en poids d'acide polyacrylique sodé.

La dispersion est très épaisse (viscosité d'environ 10 Pa·s) et doit être dégazée avant utilisation en raison de la présence de nombreuses bulles.

La poudre de PEKK imprégnée de tensioactif et d'agent épaississant présente en outre une très faible stabilité thermique. En effet, après avoir subi le cycle thermique mentionné à l'exemple 1, l'échantillon présente une température de cristallisation bien plus faible qu'un échantillon équivalent préparé avec une teneur en tensioactif de 1% en poids.

On constate ainsi que l'agent épaississant peut être aussi nocif qu'un tensioactif, voire davantage, pour une résine PAEK exposée à des températures élevées.

En vue de préparer des semi-produits ayant un bon comportement dans la transformation ultérieure en matériaux composites, il est donc préférable d'utiliser des bains de dispersion aqueuse de poudre de PAEK dépourvues d'agent épaississant.

### Exemple 12 - 21 : Ajustement de la viscosité

Afin d'étudier l'effet du composé organique volatil sur la viscosité de la phase aqueuse de la dispersion, on a préparé des dispersions à teneurs variables en tensioactif et en isopropanol, selon le protocole indiqué à l'exemple 10.

La viscosité dynamique des dispersions a été mesurée à 25°C sur un viscosimètre Brookfield de modèle DV2T Extra sous contrainte de cisaillement de 6,8 s⁻¹.

Les résultats sont rassemblés dans le tableau 3 ci-dessous.

**Tableau 3 : Viscosité dynamique en fonction de la teneur en tensioactif et isopropanol**

| Ex | Teneur en tensioactif (% en poids par rapport au poids de PEKK) | Teneur en isopropanol (% en poids par rapport au poids de phase liquide) | Viscosité dynamique (mPa·s ) |
|---|---|---|---|
| 12* | 1 | 0 | 60 |
| 13 | 1 | 10 | 151 |
| 14 | 1 | 20 | 248 |
| 15 | 1 | 25 | 400 |
| 16 | 1 | 30 | 944 |
| 17 | 0 | 10 | 737 |
| 18 | 0.1 | 10 | 669 |
| 19 | 0.25 | 10 | 513 |
| 20 | 0.5 | 10 | 191 |
| 21 | 1 | 10 | 151 |

| | | | |
|---|---|---|---|
| *exemple de comparaison | | | |

Les résultats mettent en évidence qu'un choix adapté de la teneur en tensioactif et en isopropanol permet de faire varier la viscosité de la phase aqueuse de la dispersion sur une large plage.

Dans le cas exemplifié, il est ainsi possible d'ajuster la viscosité entre 60 et 1000 mPa·s en jouant sur ces deux paramètres.

### Exemple 22 : Effet anti-mousse de l'alcool dans la dispersion

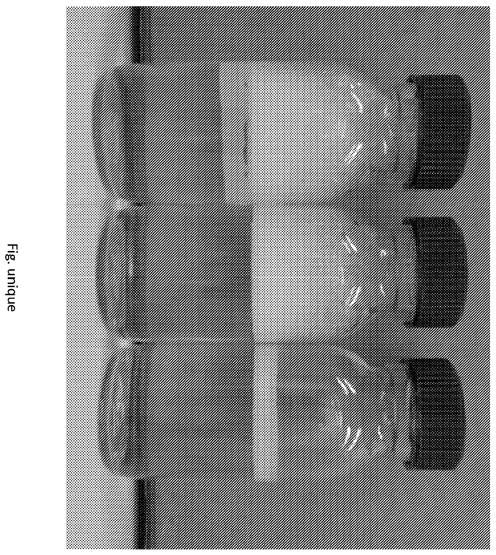

Afin d'étudier l'effet anti-mousse du composé organique volatil dans la solution aqueuse de tensioactif, on a agité les dispersions des exemples 12 à 14 vigoureusement pendant 3 minutes. Après avoir laissé les dispersions au repos pendant 5 minutes, l'aspect des dispersions a été fixé par photographie (voir Fig. 1).

On remarque que la solution dans le récipient de droite (20% en poids d'isopropanol) présente nettement moins de mousse que le récipient de gauche (0% en poids d'isopropanol) ou celui du milieu (10% en poids d'isopropanol). Dans ce mélange, l'isopropanol agit donc comme un agent anti-mousse.

En présence de poudre de PEKK, cet effet est encore plus marqué, puisqu'il suffit de 10% en poids d'isopropanol pour obtenir un effet anti-mousse satisfaisant.

Un alcool ajouté à la phase aqueuse de dispersions de poudres de PAEK peut donc également jouer le rôle d'un agent anti-mousse efficace, et ainsi éviter l'ajout d'un additif supplémentaire.

On constate de l'ensemble des études rapportées ci-dessus que le dosage du tensioactif constitue un facteur essentiel concernant l'évolution de la viscosité d'une résine PAEK soumise à un cycle thermique représentatif de celui requis pour la consolidation d'un semi-produit en pièces composites. Par ailleurs, les exemples ci-dessus mettent en évidence l'intérêt d'ajouter un alcool à la phase aqueuse de la dispersion. En effet, celui-ci peut avoir une triple fonction : compenser partiellement le tensioactif omis, moduler la viscosité sans ajout d'agent épaississant, et remplacer un agent anti-mousse éventuel.

L'utilisation d'un tensioactif à faible dosage, couplé éventuellement à un alcool, et la suppression d'autres additifs dans la mesure du possible dans la dispersion de PAEK utilisée lors de la fabrication de semi-produits selon le procédé de l'invention permet donc, en préservant la viscosité de la résine PAEK, d'assurer une bonne qualité des pièces composites obtenues à partir de ceux-ci.

## Revendications

1. Procédé de préparation d'un semi-produit comprenant une résine à base de PAEK et des fibres de renfort, comprenant les étapes de :
a. Préparation d'une dispersion comprenant une résine à base de PAEK sous forme pulvérulente dispersée dans une phase aqueuse comprenant au moins un composé organique volatil et optionnellement un tensioactif ;
b. Mise en contact des fibres de renfort avec ladite dispersion aqueuse ;
c. Séchage des fibres imprégnées de dispersion ; et
d. Chauffage des fibres imprégnées à une température suffisante pour la fusion de la résine, de sorte à former un semi-produit,
**caractérisé en ce que** la phase aqueuse de la dispersion présente une viscosité dynamique, mesurée à 25°C sous contrainte de cisaillement de 6.8 s⁻¹, est comprise entre 0.1 et 25 Pa·s ; et que lorsque le tensioactif est présent, sa teneur est inférieure à 1 % en poids par rapport à la masse de résine dispersée.

2. Procédé de préparation selon la revendication 1, dans lequel le composé organique volatil est choisi parmi les alcools, cétones, aldéhydes, esters d'acides carboxyliques, glycols et éthers.

3. Procédé de préparation selon l'une des revendications 1 à 2, dans lequel le composé organique volatil est un alcool choisi parmi le méthanol, l'éthanol, l'isopropanol, le n-propanol, le n-butanol, le 2-butanol, le tert. butanol, le 1-méthoxy-2-propanol, le 1-éthoxy-2-propanol et leurs mélanges, un glycol choisi parmi l'éthylène glycol, le propylène glycol et leurs mélanges, une cétone telle que l'acétone, un éther, un ester d'acide carboxylique choisi parmi l'acétate de méthyle, l'acétate d'éthyle et l'acétate de propyle et leurs mélanges.

4. Procédé de préparation selon l'une des revendications 1 à 3, dans lequel le composé organique volatil forme avec l'eau de la phase aqueuse un azéotrope.

5. Procédé de préparation selon l'une des revendications 1 à 4, dans lequel les fibres de renfort sont des fibres de carbone.

6. Procédé de préparation selon l'une des revendications 1 à 5, dans lequel la phase aqueuse de la dispersion présente une viscosité dynamique, mesurée à 25°C sous contrainte de cisaillement de 6.8 s⁻¹, de 0.1 à 5, en particulier de 0.300 à 3 et tout particulièrement de 0.5 à 2 Pa·s.

7. Procédé de préparation selon l'une des revendications 1 à 6, dans lequel la résine PAEK est choisie parmi le groupe constitué de poly-éther-cétone (PEK), polyéther-éther-cétone (PEEK), poly-éther-éther-cétone-cétone (PEEKK), poly-éther-cétone-cétone (PEKK), poly-éther-cétone-éther-cétone-cétone (PEKEKK), poly-éther-éther-cétone-éther-cétone (PEEKEK), poly-éther-éther-éther-cétone (PEEEK), et poly-éther-diphényle-éther-cétone (PEDEK), leurs mélanges et leurs copolymères entre eux ou avec d'autres membres de la famille des PAEK.

8. Procédé de préparation selon l'une des revendications 1 à 7, dans lequel la résine PAEK est un PEKK présentant un pourcentage massique en motifs téréphtaliques par rapport à la somme des motifs téréphtaliques et isophtaliques compris entre 35 et 100%.

9. Procédé de préparation selon l'une des revendications 1 à 8, dans lequel la résine PAEK pulvérulente dans la dispersion présente un diamètre médian D50 de 1 à 300 µm, de préférence de 5 à 100 et tout particulièrement de 10 à 50 µm tel que mesuré selon la norme ISO 13 320.

10. Procédé de préparation selon l'une des revendications 1 à 9, dans lequel le semi-produit est choisi parmi un pré-imprégné ou une tape.

11. Dispersion utile dans la préparation d'un semi-produit, comprenant :
a. 1 - 50 % en poids de résine à base de PAEK présentant une taille de particules moyenne en nombre comprise entre 1 et 300 µm, telle que mesurée selon la norme ISO 13 320 ;
b. 0 - 1 % en poids, calculé par rapport au poids de la résine, d'au moins un tensioactif;
c. 1 - 40 % en poids d'au moins un composé organique volatil ;
d. 0 - 1 % en poids d'autres additifs ; et
e. le reste d'eau,
étant entendu que la phase aqueuse présente une viscosité dynamique, mesurée à 25°C sous contrainte de cisaillement de 6,8 s⁻¹, comprise entre 0.1 et 25 Pa·s.

12. Dispersion selon la revendication 11, comprenant 15 - 35% en poids de résine à base de PAEK.

## Patentansprüche

1. Verfahren zur Herstellung eines Halbprodukts, das einen Kunststoff auf Basis von PAEK und Verstärkungsfasern umfasst, das folgende Schritte umfasst:
a. Herstellen einer Dispersion, die einen Kunststoff auf Basis von PAEK in Pulverform umfasst, der fein in einer wässrigen Phase verteilt ist, die mindestens eine flüchtige organische Verbindung und optional ein Tensid umfasst;
b. Inkontaktbringen der Verstärkungsfasern mit der wässrigen Dispersion;
c. Trocknen der mit der Dispersion getränkten Fasern und
d. Erwärmen der getränkten Fasern auf eine Temperatur, die zum Schmelzen des Kunststoffs ausreicht, damit ein Halbprodukt gebildet wird,
**dadurch gekennzeichnet, dass** die wässrige Phase der Dispersion eine dynamische Viskosität, gemessen bei 25°C bei einer Schergeschwindigkeit von 6,8 s⁻¹, zwischen 0,1 und 25 Pa·s aufweist; und dadurch, dass
wenn das Tensid vorhanden ist, sein Gehalt unter 1 Gewichts-% bezogen auf die Masse des fein verteilten Kunststoffs liegt.

2. Verfahren zur Herstellung nach Anspruch 1, wobei die flüchtige organische Verbindung aus Alkoholen, Ketonen, Aldehyden, Carbonsäureestern, Glykolen und Ethern ausgewählt ist.

3. Verfahren zur Herstellung nach einem der Ansprüche 1 bis 2, wobei die flüchtige organische Verbindung ein Alkohol ist, das ausgewählt ist aus Methanol, Ethanol, Isopropanol, n-Propanol, n-Butanol, 2-Butanol, tert-Butanol, 1-Methoxy-2-Propanol, 1-Ethoxy-2-Propanol und ihren Mischungen, einem Glykol, ausgewählt aus Ethylenglykol, Propylenglykol und ihren Mischungen, einem Keton, beispielsweise Aceton, einem Ether, einem Carbonsäureester, ausgewählt aus Methylacetat, Ethylacetat und Propylacetat und ihren Mischungen.

4. Verfahren zur Herstellung nach einem der Ansprüche 1 bis 3, wobei die flüchtige organische Verbindung mit dem Wasser der wässrigen Phase ein Azeotrop bildet.

5. Verfahren zur Herstellung nach einem der Ansprüche 1 bis 4, wobei die Verstärkungsfasern Kohlenstofffasern sind.

6. Verfahren zur Herstellung nach einem der Ansprüche 1 bis 5, wobei die wässrige Phase der Dispersion eine dynamische Viskosität, gemessen bei 25°C bei einer Schergeschwindigkeit von 6,8 s⁻¹, von 0,1 bis 5, insbesondere 0,300 bis 3 und ganz besonders von 0,5 bis 2 Pa·s aufweist.

7. Verfahren zur Herstellung nach einem der Ansprüche 1 bis 6, wobei der PAEK-Kunststoff aus der Gruppe, die aus Polyetherketon (PEK), Polyetheretherketon (PEEK), Polyetheretherketonketon (PEEKK), Polyetherketonketon (PEKK), Polyetherketonetherketonketon (PEKEKK), Polyetheretherketonetherketon (PEEKEK), Polyetheretheretherketon (PEEEK) und Polyetherdiphenyletherketon (PEDEK) besteht, ihren Mischungen und ihren Copolymeren miteinander oder mit weiteren Elementen der Familie der PAEK ausgewählt ist.

8. Verfahren zur Herstellung nach einem der Ansprüche 1 bis 7, wobei der PAEK-Kunststoff ein PEKK ist, der einen Massenanteil an Terephthaleinheiten bezogen auf die Summe der Terephthal- und Isophthaleinheiten zwischen 35 und 100% aufweist.

9. Verfahren zur Herstellung nach einem der Ansprüche 1 bis 8, wobei der pulverförmige PAEK-Kunststoff in der Dispersion einen nach der Norm ISO 13320 ermittelten mittleren Durchmesser D50 von 1 bis 300 µm, vorzugsweise von 5 bis 100 und ganz besonders von 10 bis 50 µm aufweist.

10. Verfahren zur Herstellung nach einem der Ansprüche 1 bis 9, wobei das Halbprodukt aus einem Prepreg oder einem Band ausgewählt ist.

11. Dispersion, die bei der Herstellung eines Halbprodukts einsetzbar ist, umfassend:
a. 1 bis 50 Gewichts-% des Kunststoffs auf Basis von PAEK, der ein nach der Norm ISO 13320 ermitteltes Zahlenmittel der Teilchengröße zwischen 1 und 300 µm aufweist;
b. 0 bis 1 Gewichts-% von mindestens einem Tensid, berechnet bezogen auf das Gewicht des Kunststoffs;
c. 1 bis 40 Gewichts-% von mindestens einer flüchtigen organischen Verbindung;
d. 0 bis 1 Gewichts-% weitere Zusatzstoffe, und
e. Wasser als Rest,
wobei die wässrige Phase eine dynamische Viskosität, gemessen bei 25°C bei einer Schergeschwindigkeit von 6,8 s⁻¹, zwischen 0,1 und 25 Pa·s aufweist.

12. Dispersion nach Anspruch 11, die 15 bis 35 Gewichtsprozent des Kunststoffs auf Basis von PAEK umfasst.

## Claims

1. Process for the preparation of a semi-finished product comprising a PAEK-based resin and reinforcing fibres, comprising the stages of:
a. preparation of a dispersion comprising a PAEK-based resin in the pulverulent form dispersed in an aqueous phase comprising at least one volatile organic compound and optionally one surfactant;
b. bringing the reinforcing fibres into contact with said aqueous dispersion;
c. drying the fibres impregnated with dispersion; and
d. heating the impregnated fibres to a temperature sufficient for the melting of the resin, so as to form a semi-finished product,
**characterized in that** the aqueous phase of the dispersion exhibits a dynamic viscosity, measured at 25°C under a shear stress of 6.8 s⁻¹, of between 0.1 and 25 Pa·s; and that,
when the surfactant is present, its content is less than 1% by weight, with respect to the weight of dispersed resin.

2. Preparation process according to Claim 1, in which the volatile organic compound is chosen from alcohols, ketones, aldehydes, carboxylic acid esters, glycols and ethers.

3. Preparation process according to either of Claims 1 and 2, in which the volatile organic compound is an alcohol chosen from methanol, ethanol, isopropanol, n-propanol, n-butanol, 2-butanol, tert-butanol, 1-methoxy-2-propanol, 1-ethoxy-2-propanol and their mixtures, a glycol chosen from ethylene glycol, propylene glycol and their mixtures, a ketone, such as acetone, an ether, a carboxylic acid ester chosen from methyl acetate, ethyl acetate and propyl acetate and their mixtures.

4. Preparation process according to one of Claims 1 to 3, in which the volatile organic compound forms an azeotrope with the water of the aqueous phase.

5. Preparation process according to one of Claims 1 to 4, in which the reinforcing fibres are carbon fibres.

6. Preparation process according to one of Claims 1 to 5, in which the aqueous phase of the dispersion exhibits a dynamic viscosity, measured at 25°C under a shear stress of 6.8 s⁻¹, of from 0.1 to 5, in particular from 0.300 to 3 and very particularly from 0.5 to 2 Pa·s.

7. Preparation process according to one of Claims 1 to 6, in which the PAEK resin is chosen from the group consisting of poly(ether ketone) (PEK), poly(ether ether ketone) (PEEK), poly(ether ether ketone ketone) (PEEKK), poly(ether ketone ketone) (PEKK), poly(ether ketone ether ketone ketone) (PEKEKK), poly(ether ether ketone ether ketone) (PEEKEK), poly(ether ether ether ketone) (PEEEK) and poly(ether diphenyl ether ketone) (PEDEK), their mixtures and their copolymers with one another or with other members of the family of the PAEKs.

8. Preparation process according to one of Claims 1 to 7, in which the PAEK resin is a PEKK exhibiting a percentage by weight of terephthalic units, with respect to the sum of the terephthalic and isophthalic units, of between 35% and 100%.

9. Preparation process according to one of Claims 1 to 8, in which the pulverulent PAEK resin in the dispersion exhibits a median diameter D50 of from 1 to 300 µm, preferably from 5 to 100 µm and very particularly from 10 to 50 µm, as measured according to Standard ISO 13 320.

10. Preparation process according to one of Claims 1 to 9, in which the semi-finished product is chosen from a prepreg or a tape.

11. Dispersion of use in the preparation of a semi-finished product, comprising:
a. 1% - 50% by weight of PAEK-based resin exhibiting a number-average particle size of between 1 and 300 µm, as measured according to Standard ISO 13 320;
b. 0% - 1% by weight, calculated with respect to the weight of the resin, of at least one surfactant;
c. 1% - 40% by weight of at least one volatile organic compound;
d. 0% - 1% by weight of other additives; and
e. the remainder water,
it being understood that the aqueous phase exhibits a dynamic viscosity, measured at 25°C under a shear stress of 6.8 s⁻¹, of between 0.1 and 25 Pa·s.

12. Dispersion according to Claim 11, comprising 15% - 35% by weight of PAEK-based resin.
